(19) **Europäisches Patentamt / European Patent Office / Office européen des brevets**

(11) **EP 2 376 256 B1**

(12) **FASCICULE DE BREVET EUROPEEN**

(45) Date de publication et mention de la délivrance du brevet:
**30.08.2017 Bulletin 2017/35**

(21) Numéro de dépôt: **09797106.3**

(22) Date de dépôt: **27.11.2009**

(51) Int Cl.:
*B23K 35/362* (2006.01)  *B32B 15/01* (2006.01)
*C22C 38/00* (2006.01)  *C22C 38/02* (2006.01)
*C22C 38/04* (2006.01)  *C22C 38/44* (2006.01)
*C22C 38/46* (2006.01)  *C22C 38/48* (2006.01)
*C22C 38/50* (2006.01)  *C22C 38/60* (2006.01)
*B23K 35/30* (2006.01)  *B23K 35/36* (2006.01)
*C22C 38/42* (2006.01)

(86) Numéro de dépôt international:
**PCT/FR2009/052319**

(87) Numéro de publication internationale:
**WO 2010/066981 (17.06.2010 Gazette 2010/24)**

(54) **FLUX ET FIL POUR LE SOUDAGE À L'ARC SUBMERGÉ DES ACIERS CRMOV**

FÜLLDRAHT ZUR UNTERWASSER-LICHTBOGENSCHWEISSUNG VON CRMOV-STAHLEN

FLUX AND WIRE FOR SUBMERGED ARC WELDING OF CRMOV STEELS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.12.2008 FR 0858371**

(43) Date de publication de la demande:
**19.10.2011 Bulletin 2011/42**

(73) Titulaire: **AIR LIQUIDE WELDING FRANCE**
**75007 Paris (FR)**

(72) Inventeurs:
• **LEDUEY, Bruno**
  **F-95000 Cergy (FR)**
• **FLOROS, Nicolas**
  **F-95800 Courdimanche (FR)**
• **CHOVET, Corinne**
  **F-78700 Conflans Sainte Honorine (FR)**

(74) Mandataire: **Pittis, Olivier**
**L'Air Liquide, S.A.**
**Service Brevets & Marques**
**75, Quai d'Orsay**
**75321 Paris Cedex 07 (FR)**

(56) Documents cités:
**FR-A- 2 074 278    FR-A- 2 740 715**
**JP-A- 5 305 481    JP-A- 56 141 992**
**JP-A- 61 132 297**

• **CLERGE M ET AL: "OPTIMISATION OF INTERMEDIATE HEAT TREATMENTS AND STRESS RELIEF OF CRMOV STEELS" WELDING INTERNATIONAL, TAYLOR & FRANCIS, ABINGDON, GB, vol. 19, no. 11, 1 janvier 2005 (2005-01-01), pages 888-893, XP001239643 ISSN: 0950-7116**

**Description**

L'invention porte sur un flux de soudage à l'arc submergé des aciers CrMoV permettant d'éviter ou minimiser les fissurations au réchauffage, ainsi qu'un fil de soudage, un procédé de soudage à l'arc submergé utilisant ce fil et ce flux, et une composition métal fondu (i.e. un joint de soudure) obtenue par fusion dudit fil et soudage d'une ou plusieurs pièces en acier CrMoV.

Les aciers faiblement alliés avec les éléments Cr, Mo et V, encore appelés aciers CrMoV, c'est-à-dire les aciers contenant moins de 3.5 % en poids en lesdits éléments d'alliage, servent notamment à la fabrication de réacteurs ou de cuves utilisés dans le raffinage de produits pétroliers ou en pétrochimie.

Une composition métallurgique typique de ces types d'aciers faiblement alliés, c'est-à-dire du métal de base constituant ces aciers, est donnée dans le Tableau 1 suivant.

Tableau 1 : Composition (en % en poids) du métal de base

| C | Si | Mn | P | S | Cr | Mo | Ni | Nb | Ti | V | Cu | B | Fe |
|---|---|---|---|---|---|---|---|---|---|---|---|---|---|
| 0.11 à 0.15 | ≤0.1 | 0.3à 0.6 | ≤0.015 | ≤0.01 | 2 à 2.5 | 0.9à 1.1 | ≤0.25 | ≤0.07 | ≤0.03 | 0.25 à 0.35 | ≤0.2 | ≤0.002 | Reste |

Ces aciers sont classiquement soudés par mise en oeuvre de procédés de soudage à l'arc submergé (ci-après appelé « soudage AS ») utilisant un flux de soudage et un fil qui est fondu par un arc électrique en apportant ainsi du métal d'apport de manière à former le joint de soudure désiré.

Les pièces en aciers CrMoV à souder peuvent être des tôles, des plaques, des pièces forgées ou des tubes.

Dans tous les cas, pendant le soudage AS de telles pièces en aciers CrMoV, il faut éviter ou au moins minimiser le phénomène de fissuration au réchauffage qui est nuisible à la tenue des structures ainsi soudées.

En effet, pendant la fabrication d'une structure soudée, tel un réacteur ou analogue, constituée, au moins en partie, d'un tel acier CrMoV soudé par soudage AS, un ou des traitements thermiques intermédiaires de détensionnement post soudage sont effectués entre environ 620 et 690°C, typiquement entre 650 et 680°C environ, avant le traitement thermique final de l'ensemble de la structure.

Or, lors de ce traitement thermique de détensionnement intermédiaire, un phénomène de fissuration au réchauffage peut se produire et des fissures inter-granulaires se former au niveau du joint de soudure soit lors du traitement de détensionnement lui-même, préférentiellement entre 650 et 680°C, soit par passage dans cette plage de température.

Ces fissures inter-granulaires peuvent apparaître dans le métal fondu ou en zone affectée thermiquement (ZAT) du métal de base. En fait, ce phénomène de fissuration au réchauffage est lié à la conjonction de trois facteurs, à savoir la présence de contraintes résiduelles dues au soudage, le durcissement par précipitation de carbures des grains et la fragilisation des joints de grains par ségrégation d'éléments ; le facteur prépondérant étant celui de la fragilisation des joints de grains.

Ce phénomène de fissuration au réchauffage est très problématique au plan industriel car il oblige à opérer des réparations des structures soudées fissurées, voire il conduit à des ruptures des structures soudées si les fissures ne sont pas détectées à temps et réparées.

Bien que ce problème soit connu, aucune solution réellement efficace n'a encore été proposée jusqu'à présent pour éviter ou de minimiser ce phénomène de fissuration au réchauffage engendré par le traitement thermique de détensionnement intermédiaire post-soudage, d'une ou plusieurs pièces constituées ou formées, en tout ou en partie, d'acier faiblement allié avec les éléments Cr, Mo et V.

Par ailleurs, on connaît le document FR-A-2740715 qui enseigne un fil et un métal déposé pour le soudage à l'arc sous flux des aciers Cr-Mo à résistance élevée contenant des éléments C, Si, Mn, Cr, Mo, V, N et Fe, et des impuretés de type P, Al, Ni, Ti, S, Sn, As, Sb et O. L'influence éventuelle d'autres éléments ou impuretés sur la fissuration au réchauffage n'est pas abordée dans ce document.

En outre, le document FR-A-2074278 divulgue un procédé de soudage à l'arc submergé des aciers permettant d'améliorer la ténacité du métal déposé et la forme du cordon obtenu. Pour ce faire, ce document préconise d'utiliser un flux formé d'une poudre métallique contenant les éléments Fe, Si et Mn avec dimensions de grains contrôlée, et d'une poudre non-métallique formée MgO, de carbonate ou d'oxalate et des agents de formation de laitier, et ayant une basicité donnée. L'influence des éléments ou d'impuretés éventuelles sur la fissuration au réchauffage n'est pas abordée dans ce document.

De là, un problème à résoudre est dès lors d'éviter ou au moins de pouvoir minimiser la fissuration au réchauffage des aciers CrMoV soudés par procédé de soudage AS.

Une solution selon l'invention repose sur des formulations de flux et de fil de soudage destinées au soudage à l'arc submergé des aciers CrMoV permettant d'éviter ou de minimiser ledit phénomène de fissuration au réchauffage, ainsi qu'une composition de métal fondu, en particulier obtenue par mise en oeuvre dudit procédé de soudage AS avec lesdits fils et flux, présentant une bonne résistance à la fissuration au réchauffage.

Selon un premier aspect, l'invention porte sur un flux aggloméré de soudage comprenant, exprimé en % en poids de flux :

- de 0.1 à 0.6% de carbone (C),
- de 0.3 à 3% de manganèse (Mn),
- moins de 0.006% de soufre (S),
- moins de 0.015% de plomb (Pb),
- moins de à 0.025% de phosphore (P),
- de 0.1 à 0.8% de titane (Ti),
- moins de 0.02% d'antimoine (Sb),
- et avec: (% S) + (% Sb) + (% P) + (% Pb) < 0.040%

où : (% S), (% Sb), (% P) et (% Pb) sont les quantités pondérales (exprimées en % en poids) des éléments S, Sb, P et Pb, respectivement, dans le flux.

Par flux aggloméré, on entend que le flux est formé de particules ou de petits granulés composées majoritairement de produits minéraux, par exemple l'oxyde d'aluminium ou l'oxyde de silicium et éventuellement de composés métalliques sous forme de poudres auxquels on ajoute un (ou des) liant à base silicate inorganique aqueux, par exemple un silicate de sodium. Ces produits additionnels et composés métalliques pulvérulents éventuels forment l'essentiel de la composition du flux. Les produits et composés additionnels présents sont agglomérés entre eux et avec les éléments ci-dessus de manière à former les particules de flux.

Il est à noter que le carbone et le soufre présents dans le flux sont susceptibles d'être analysés par absorption infrarouge ; le manganèse et le phosphore par fluorescence X (XRF) ; et le plomb, le titane et l'antimoine par spectrophotométrie ICP-AES (*Inductively Coupled Plasma Atomic Emission Spectrophotometry*) et/ou par spectroscopie de masse ICP-MS (*Inductively Coupled Plasma Mass Spectroscopy*).

Selon le cas, le flux de l'invention peut comprendre l'une ou plusieurs des caractéristiques suivantes :

- le flux comprend de 0.2 à 0.5% de carbone (C), de 0.5 à 2% de manganèse (Mn), moins de 0.004% de soufre (S), de 0.0005 à 0.01% de plomb (Pb), de 0.005 à 0.015% de phosphore (P), de 0.3 à 0.6% de titane (Ti), de 0.001 à 0.01% d'antimoine (Sb).
- préférentiellement (% S) + (% Sb) + (% P) + (% Pb) < 0.025 %.

Aux seuils limites individuels de chacun de ces 4 éléments (P, S, Sb, Pb), doit s'ajouter une contrainte supplémentaire de leur effet combiné. En effet, au-delà du seuil limite acceptable de leur somme, la concentration globale de ces éléments va avoir des conséquences néfastes sur la fissuration au réchauffage.

- le carbone est sous forme d'un ou plusieurs carbonates ou carbures métalliques, par exemple le carbonate de calcium ou le carbure de fer.
- il comprend de 2 à 10% de silicium (Si), de préférence de 4 à 8 % de Si. Le Si peut être apporté sous forme d'oxyde simple (SiO$_2$) et/ou mixte (wollastonite, parawollastonite ou autres silicates) et/ou d'alliage métallique.
- il comprend de 10 à 30% de magnésium, de préférence de 15 à 25 % de magnésium.
- il comprend de 5 à 15 % d'aluminium, de préférence de 7 à 12 % de d'aluminium.
- le magnésium et/ou l'aluminium sont sous forme d'oxyde simple, à savoir MgO et Al$_2$O$_3$, respectivement.
- il comprend en outre de 20 à 40% de fluorures d'alcalino-terreux, de préférence un ou des fluorures de calcium (Ca), par exemple CaF$_2$, et/ou de 1 à 2% d'alcalins sous forme de silicate aqueux, par exemple un silicate de sodium.
- il comprend au moins un fluorure de calcium, en particulier CaF$_2$.

Il est à noter que les teneurs en aluminium, silicium et magnésium peuvent être mesurées par XRF, et les alcalins par ICP-AES ou ICP-MS.

Selon un deuxième aspect, l'invention porte sur un fil de soudage comprenant, exprimé par rapport au poids total du fil :

- de 0.05 à 0.15% de carbone (C),de préférence de 0.07 à 0.13% de C,
- de 0.4 à 1.3% de manganèse (Mn), de préférence de 0.45 à 1.2% de Mn,
- de 0.07 à 0.20% de silicium (Si), de préférence de 0.09 à 0.18% de Si,
- de 2 à 2.8% de chrome (Cr), de préférence de 2.2 à 2.6% de Cr,
- de 0.5 à 1.2% de molybdène (Mo), de préférence de 0.7 à 1.1% de Mo,

- de 0.01 à 0.20% de nickel (Ni), de préférence de de 0.01 à 0.15% de Ni,
- de 0.001 à 0.010% de soufre (S), de préférence de 0.001 à 0.008% de S,
- de 0.025% à 0.012% de phosphore (P), de préférence de 0.003 à 0.010% de P,
- de 1 à 20 ppm d'antimoine (Sb), de préférence entre et 15 ppm de Sb,
- de 0.01 à 3 ppm de plomb (Pb), de préférence entre 0.01 et 2 ppm de Pb,
- de 0.01 à 3 ppm de bismuth (Bi), de préférence 0.01 et 2 ppm de Bi, et
- de 0.10 à 0.35% de vanadium (V), de préférence 0.15 à 0.30% de V,
- et du fer (Fe) pour le reste.

Dans ce cas, le carbone et le soufre peuvent être analysés par absorption infrarouge, et les autres éléments par ICP-AES et/ou ICP-MS.

Selon le cas, le fil de l'invention peut comprendre l'une ou plusieurs des caractéristiques suivantes :

- de 0.004 à 0.035% de niobium (Nb), de préférence 0.005 à 0.03% de Nb.
- de 1 à 100 ppm d'étain (Sn), de préférence 1 à 80 ppm de Sn.
- de 1 à 100 ppm d'arsenic (As), de préférence 1 à 80 ppm de As.

Ces éléments sont susceptibles d'être analysés par ICP-AES et/ou ICP-MS.

Selon un troisième aspect, l'invention porte sur un procédé de soudage à l'arc submergé (AS) d'une (ou plusieurs) pièce(s) en acier CrMoV, dans lequel on met en oeuvre un fil fusible et un flux de manière à obtenir un joint de soudure sur ladite au moins une pièce en acier CrMoV, caractérisé en ce que le fil est un fil de soudage selon l'invention et/ou le flux est un flux de soudage selon l'invention.

Selon le cas, le procédé de soudage de l'invention peut comprendre l'une ou plusieurs des caractéristiques suivantes :

- la pièce est en un acier CrMoV comprenant, au total, moins de 3 % en poids de la somme en éléments Mo, Cr et V.
- la pièce est en un acier CrMoV comprenant de 2 à 2.5% de Cr, de 0.9 à 1.1% de Mo, de 0.25 à 0.35% de V et du fer.
- le joint de soudure est par soudage multi-passes, en général plus de 10 passes, typiquement entre 20 et 200 passes de soudage.

Selon un quatrième aspect, l'invention porte sur un joint de soudure, c'est-à-dire du métal déposé obtenu par fusion du fil, susceptible d'avoir été obtenu par le procédé de soudage selon l'invention, caractérisé en ce qu'il comprend, exprimé en poids :

- de 0.07 à 0.13% de carbone (C),
- de 0.55 à 1% de manganèse (Mn),
- de 0.09 à 0.18% de silicium (Si),
- de 2.2 à 2.6% de chrome (Cr),
- de 0.7 à 1.1 % de molybdène (Mo),
- de 10 à 100 ppm de soufre (S),
- de 30 à 100 ppm de phosphore (P),
- de 1 à 20 ppm d'antimoine (Sb),
- de 0.01 à 3 ppm de plomb (Pb),
- de 0.01 à 3 ppm de bismuth (Bi),
- de 0.15 à 0.3% de vanadium (V),
- de 1 à 100 ppm d'étain (Sn),
- de 1 à 100 ppm d'arsenic (As),
- et reste fer (Fe),

et les quantités pondérales (exprimées en ppm par rapport au poids de joint) en éléments P, S, As, Sn, Sb, Pb et Bi, respectivement, sont telles que : RCIndex < 25, de préférence, l'index RCIndex < 20,

où: $RCIndex = 0.05 \times (P) + 0.01 \times (S) + 0.01 \times (As) + 0.18 \times (Sn) + 0.01 \times (Sb) + 5 \times (Pb) + 2 \times (Bi)$.

En fait, cet indice RCIndex permet de d'apprécier l'effet combiné des différents éléments chimiques résiduels qui ont une influence néfaste sur la fissuration au réchauffage.

L'analyse chimique du métal déposé est réalisée dans l'axe du joint, c'est-à-dire hors dilution avec du métal provenant de l'acier CrMoV (i.e. du métal de base).

Le carbone, l'oxygène et le soufre peuvent être analysés par absorption infrarouge ; l'azote par catharométrie ; le manganèse ; le silicium, le chrome, le molybdène, le vanadium, le nickel et le niobium par spectroscopie d'émission optique (OES) ; et les autres éléments par ICP-AES et/ou ICP-MS.

Par ailleurs, le joint peut également contenir l'un ou plusieurs des éléments suivants :

- de 0.002 à 0.01% de titane (Ti),
- de 0.015 à 0.04% d'oxygène (O),
- de 0.003 à 0.015% d'azote (N),
- de 0.005 à 0.03% de niobium (Nb), et
- de 0.01 à 0.2 de nickel (Ni).

Selon un cinquième aspect, l'invention porte sur une pièce en acier CrMoV comprenant de 2 à 2.5% de Cr, de 0.9 à 1.1% de Mo, de 0.25 à 0.35% de V et du fer, caractérisée en ce qu'elle comprend au moins un joint de soudure selon l'invention.

De préférence, la pièce est un tube, une plaque ou une pièce forgée.

La présente invention va être mieux comprise grâce aux explications suivantes précisant l'influence des différents éléments métalliques présents dans le joint de soudure sur la résistance au phénomène de fissuration au réchauffage.

### Carbone (C)

Le carbone est ajouté pour assurer les propriétés de traction à température ambiante et à haute température et de résilience. Un taux de C dans le joint, c'est-à-dire le métal déposé, trop élevé conduit à une structure dure de type martensite et/ou à un excès de précipités de type carbures qui durcissent la structure, conduisant à des propriétés de résilience trop faible. A l'inverse, une teneur en C trop faible conduit à des propriétés mécaniques de traction insuffisantes. De là, il convient de respecter dans le joint, une quantité en poids de carbone (C) comprise entre environ 0.07 et 0.13%, préférentiellement de 0.075 à 0.012 %.

### Silicium (Si)

Le silicium agit comme désoxydant dans le métal fondu. Il doit donc être présent en quantité suffisante pour contrôler la teneur en oxygène (O). Si la teneur en Si est trop élevée, les propriétés de résilience sont dégradées, ainsi que la résistance à la fissuration au réchauffage. De là, il convient de limiter la quantité de Si dans le joint dans la plage allant de 0.07 à 0.20% en poids de préférence 0.09 à 0.18%.

### Manganèse (Mn)

Le Mn a une grande influence sur la trempabilité du métal fondu et, de ce fait, est un élément très important pour assurer les propriétés mécaniques du métal fondu. En revanche, une quantité trop importante de Mn peut conduire à une fragilisation lors du traitement thermique final. La quantité en poids de Mn doit être comprise entre environ 0.55 et 1.3%, préférentiellement de 0.60 à 1.2 %.

### Chrome (Cr) et molybdène (Mo)

Les éléments Cr et Mo sont les principaux éléments d'alliage des aciers Cr-Mo-V résistants à chaud. Les éléments Cr et Mo s'associent au carbone de l'acier (C) pour former des carbures qui confèrent à l'acier et donc aussi au métal fondu des propriétés de résistance mécanique à haute température. Une teneur en Cr et/ou en Mo trop faible entraine une résistance à haute température moins élevée. Un excès de Cr ou de Mo dans le métal fondu se traduit par une détérioration des propriétés de résilience du métal fondu. De là, on veille à avoir une quantité pondérale de Cr entre 2.2 et 2.6%, et une proportion pondérale de Mo entre 0.7 et 1.1% dans le joint, de préférence encore de 2.3 à 2.5% de Cr et/ou au moins 0.8% de Mo.

### Vanadium (V)

Dans les aciers Cr-Mo-V résistants à chaud, l'addition de V a pour objectif de former des carbures de vanadium très fins, qui précipitent à l'intérieur des grains. Ces précipités contribuent à assurer au métal d'excellentes propriétés de résistance mécanique à haute température. Une teneur en V trop faible, entraine une diminution des propriétés du métal fondu à haute température. De là, on choisit une proportion de vanadium entre 0.15 à 0.3%.

Niobium (Nb)

Comme le V, le Nb a pour effet d'augmenter la résistance à chaud du métal fondu. Cependant, une teneur en Nb trop élevée conduit à une diminution des propriétés de résilience. De là, il convient de respecter une proportion de 0.005 à 0.03% en niobium dans le métal déposé.

Titane (Ti)

L'addition d'une faible quantité de Ti dans le métal fondu permet d'augmenter les propriétés de résilience. En revanche, un excès de Ti entraine une chute de ces mêmes propriétés de résilience. De ce fait, il convient de respecter une proportion de 0.002 à 0.010% en titane dans le métal déposé.

Nickel (Ni)

L'addition de nickel a pour effet de réduire le niveau de résilience. Pour cette raison, le niveau de Ni doit être inférieur à 0.2% et de préférence, inférieur ou égal à 0.15 %.

Oxygène (O)

L'oxygène est présent dans le métal fondu sous forme d'oxydes. En faible quantité, ces oxydes ont pour action de favoriser la germination d'une microstructure fine à l'intérieur des grains d'austénite primaire. Cette action est favorable à l'obtention de bonnes propriétés de résilience. Une quantité excessive d'oxygène en revanche détériore les propriétés du métal fondu. Il est dès lors souhaitable d'avoir dans le métal déposé, c'est-à-dire le joint, une teneur en oxygène comprise entre 150 et 400 ppm environ, de préférence entre 180 et 350 ppm.

Azote (N)

L'azote contenu dans le métal fondu peut être apporté par le fil ou être apporté par l'air ambiant lors du soudage. Un excès d'azote entraine la formation de précipités de nitrures de V, de Nb ou de Ti pendant le traitement thermique, qui détériorent les propriétés mécaniques du métal fondu. La teneur en N est préférentiellement inférieure à 150 ppm et avantageusement inférieure à 120 ppm.

Autres éléments : P, S, Sn, Sb, As, Pb et Bi

Les éléments P, S, Sn, Sb, As, Pb et Bi sont des éléments résiduels qui peuvent venir du fil, du flux ou des deux. Dans le métal fondu, ces éléments ségrégent aux joints de grains et les fragilisent

Comme montré dans les exemples ci-dessous, une teneur excessive en ces éléments entraine une forte susceptibilité à la fissuration au réchauffage, en particulier l'influence négative du plomb est particulièrement notable s'il se trouve en quantité excessive dans le métal déposé.

Dans le cadre de la présente invention, on limite donc la présence de ces autres éléments dans le joint de soudure en limitant leur présence dans les matériaux d'apport, à savoir le fil et/ou le flux, aux valeurs données dans le Tableau 2 ci-dessous.

Tableau 2 : Teneurs en les autres éléments dans le métal déposé

| Elément | Teneur minimale (en ppm) | Teneur maximale (en ppm) |
|---------|--------------------------|--------------------------|
| Sn | 1 | 100 |
| Sb | 1 | 20 |
| As | 1 | 100 |
| Pb | 0.01 | 3 |
| Bi | 0.01 | 3 |
| P | 30 | 100 |
| S | 10 | 100 |

De préférence, la teneur en Sn dans le métal déposé est inférieure à 60 ppm, de préférence encore inférieure à 40 ppm. De même, la teneur en Sb dans le métal déposé est de préférence inférieure à 15 ppm, celle en As est inférieure à 80 ppm, celle en Pb est inférieure à 2 ppm, voire inférieure à 1 ppm, ou celle en Bi est inférieure à 2 ppm voire inférieure à 1 ppm.

En outre, la teneur en S est de préférence inférieure à 80 ppm ou celle en P est inférieure à 80 ppm.

Avantageusement, pour minimiser encore le risque de fissuration au réchauffage, il est particulièrement recommandé que la somme des quantités pondérales (en ppm) des éléments présents dans le métal déposé (hors dilution), représentée par le paramètre RCIndex ci-dessus, soit inférieure à 20, de préférence inférieure ou égale à 16, et/ou supérieure ou égale à 2.

Exemples illustratifs

Les essais consignés ci-après visent à montrer que, lorsqu'on met en oeuvre d'un procédé de soudage AS de pièces en acier CrMoV en utilisant un flux et un fil permettant d'obtenir un joint de soudage ayant une composition métallurgique selon la présente invention, en particulier un joint avec des teneurs contrôlées en éléments résiduels P, S, Sn, Sb, As, Pb et Bi, on aboutit à une résistance élevée du joint à la fissuration au réchauffage.

La sensibilité à la fissuration au réchauffage des éprouvettes testées ici est évaluée par le biais d'essais de traction lente à haute température, c'est-à-dire à 650 °C.

Plus la striction de l'éprouvette est faible, plus l'acier CrMoV est sensible au phénomène de fissuration au réchauffage et donc le joint fragile. Une striction supérieure à 30% indique une bonne résistance à la fissuration au réchauffage en fabrication.

Les essais de traction lente sont effectués sur des éprouvettes usinées dans du métal déposé hors dilution, par exemple au centre du joint de soudure. En d'autres termes, on a réalisé les mesures sur une partie du joint de soudure dont la composition métallurgique résulte exclusivement de la fusion du fil de soudage et du flux, donc hors toute dilution avec du métal de base de la pièce en acier CrMoV.

Les pièces en acier CrMoV sur lesquelles sont opérés les dépôts de métal fondu ont la composition donnée dans le Tableau 3 ci-après.

Tableau 3 : Composition (en % en poids) du métal de base

| C | Si | Mn | P | S | Cr | Mo | Ni | Nb | Ti | V | Cu | B | Fe |
|---|----|----|---|---|----|----|----|----|----|---|----|---|----|
| 0.13 | 0.08 | 0.53 | 0.005 | 0.002 | 2.3 | 1 | 0.14 | 0.026 | 0.011 | 0.29 | 0.036 | 0.002 | reste |

Les deux flux utilisés lors du soudage AS (Flux 1 et Flux 2) ont les compositions données dans le Tableau 4 suivant.

Tableau 4

| Teneur en chaque élément | Flux 1 (% en poids) | Flux 2 (% en poids) (hors invention) |
|---|---|---|
| %C | 0.4 | 0.4 |
| %F | 16.0 | 11.5 |
| %Na | 0.4 | 0.5 |
| %Mg | 16.5 | 28.0 |
| %Al | 11.0 | 5.5 |
| %Si | 5.5 | 5.5 |
| %P | 0.012 | 0.017 |
| %S | 0.003 | 0.006 |
| %K | 1.0 | 0.8 |
| %Ca | 17.0 | 12.0 |
| %Ti | 0.4 | 0.4 |
| %Mn | 1.2 | 1.3 |
| %Sb | 0.003 | 0.015 |

(suite)

| Teneur en chaque élément | Flux 1 (% en poids) | Flux 2 (% en poids) (hors invention) |
|---|---|---|
| %Pb | 0.002 | 0.007 |
| Oxygène | reste | reste |
| (% S) + (% Sb) + (% P) + (% Pb) | 0.020 | 0.045 |

Par ailleurs, les quatre fils testés (Fil 1 à Fil 4) ont les compositions données dans le Tableau 5 suivant. Les proportions en éléments y sont exprimées en % en poids de fil, sauf lorsqu'indiqué autrement, i.e. en ppm en poids de fil.

Tableau 5

| Eléments présents | Fil 1 | Fil 2 | Fil 3 | Fil 4 (hors invention) |
|---|---|---|---|---|
| C | 0,1 | 0,11 | 0,1 | 0,11 |
| Si | 0,13 | 0,102 | 0,109 | 0,12 |
| Mn | 0,53 | 0,51 | 0,55 | 0,49 |
| Cr | 2,60 | 2,56 | 2,59 | 2,45 |
| Mo | 0,97 | 1,02 | 1,05 | 1,01 |
| Nb | 0,02 | 0,018 | 0,02 | 0,02 |
| Ni | 0,12 | 0,117 | 0,112 | 0,14 |
| V | 0,26 | 0,267 | 0,273 | 0,27 |
| P (ppm) | 30 | 30 | 40 | 56 |
| S (ppm) | 20 | 20 | 20 | 60 |
| Sn (ppm) | 37 | 21 | 20 | 60 |
| Sb (ppm) | 3,1 | 3,7 | 2,7 | 25 |
| As (ppm) | 30 | 35 | 25 | 30 |
| Pb (ppm) | 0,14 | 0,07 | 0,08 | 9 |
| Bi (ppm) | 0,005 | 0,005 | 0,01 | 1 |
| Les fils 1 et 2 avec 0.005 ppm sont arrondies à 0.01 ppm. | | | | |

Les échantillons de métal déposés hors dilution sont obtenus en appliquant les paramètres de soudage AS suivants :

- Soudage AS avec fils (Fil 1 à 4) de diamètre égal à 3.2 mm dont les compositions sont dans le Tableau 5 associés aux flux F1 et F2 du Tableau 4.
- Préchauffage entre 180°C et 200°C.
- 30 à 50 passes de soudage.
- Température du métal de base entre les passes de soudage de 200 à 230°C.
- Energie de soudage égale à environ 1.9 kJ/mm pour une vitesse de soudage de 50 cm/min.
- Courant alternatif de 31 V et 510 A délivré par une source de courant Air Liquide Welding référencée Starmatic 1003 AC/DC.

Des éprouvettes de traction cylindriques sont usinées longitudinalement dans le métal déposé, c'est-à-dire le joint de soudure obtenu pour chaque fil (Fil 1 à Fil 4). La longueur totale des éprouvettes est de 11 cm. Le diamètre de la partie calibrée est de 8 mm et la longueur de la partie calibrée est de 18 mm.

Chaque essai de traction est réalisé à 650°C, après un maintien des éprouvettes pendant 30 minutes à 650°C. La vitesse de traction est de 0.01 mm/s. La striction de chaque éprouvette est ensuite mesurée.

Les compositions des échantillons (éprouvettes) testés (% en pois de chaque élément) et les résultats de striction obtenus sont donnés dans le Tableau 6 ci-après.

Tableau 6

| Essai n° | **E1** | **E2** | **E3** | **E4** | **E5** | **E6** |
|---|---|---|---|---|---|---|
| Flux | F1 | F1 | F1 | F1 | F2 | F2 |
| Fil | Fil 1 | Fil 2 | Fil 3 | Fil 4 | Fil 1 | Fil 2 |
| C | 0,093 | 0,081 | 0,091 | 0,11 | 0,105 | 0,10 |
| Si | 0,18 | 0,13 | 0,091 | 0,15 | 0,164 | 0,14 |
| Mn | 0,84 | 0,72 | 0,63 | 0,80 | 0,79 | 0,71 |
| Cr | 2,46 | 2,40 | 2,38 | 2,22 | 2,40 | 2,34 |
| Mo | 0,92 | 1,00 | 1,00 | 0,90 | 0,98 | 0,98 |
| Nb | 0,017 | 0,015 | 0,013 | 0,015 | 0,013 | 0,015 |
| Ni | 0,12 | 0,12 | 0,12 | 0,15 | 0,117 | 0,12 |
| Ti | 0,006 | 0,005 | 0,004 | 0,005 | 0,006 | 0,005 |
| V | 0,22 | 0,23 | 0,22 | 0,22 | 0,245 | 0,23 |
| O | 0,022 | 0,027 | 0,03 | 0,03 | *0, 0315* | 0,03 |
| N | 0,01 | 0,015 | 0,0091 | 0,004 | 0,0077 | 0,011 |
| **RCIndex** | **12** | **15** | **13** | **61** | **30** | **48** |
| Striction à 650°C | **36,7** | **35,7** | **38** | 25 | 26,9 | 24 |

Comme on le voit, seuls les essais E1 à E3 ont donnés des résultats satisfaisants en termes de résistance à la striction.

On remarque aussi que le flux F1 qui présente une proportion en S, Sb, P et Pb inférieure à celle du flux F2 donne de meilleurs résultats, en particulier lorsqu'il est associé au Fil 3.

Par ailleurs, la corrélation entre l'indice RCIndex et la résistance à la striction est particulièrement notable puisque, lorsque cette indice RCI est supérieur à 25 dans le métal déposé (Essais 4, 5 et 6), on constate une chute de la striction qui devient inférieure à 30%, donc conduisant à un joint de soudure présentant une résistance insuffisante à la fissuration au réchauffage.

Des essais complémentaires ont été effectués avec plusieurs fils hors invention ayant des teneurs en impuretés Sn, Bi ou As supérieures aux limites de la présente invention. Associés au flux F1, ces fils ont conduit à des métaux fondus ayant un RCIndex supérieur à 25 et, par conséquent, des valeurs de striction supérieures à 30%. Ces essais confirment qu'il convient de limiter la présence dans le métal fondu de tous les éléments chimiques constituant le RCIndex.

En d'autres termes, afin de garantir une bonne résistance suffisante à la fissuration au réchauffage, il convient dès lors non seulement de veiller à utiliser un couple fil/flux contenant les éléments susmentionnés dans les proportions préconisées selon la présente invention mais aussi de veiller à ce que l'indice RCIndex du joint obtenu soit inférieur à 25, de préférence inférieur à 20.

En effet, comme illustré par les essais E5 et E6, on comprend que, bien que les flux et fils puissent être, indépendamment l'un de l'autre, conformes aux préconisations ci-dessus, un couple fil/flux mal assorti conduit à obtenir un indice RCIndex du joint trop élevé, donc un joint de soudure mauvais en termes de fissuration au réchauffage.

Pour ce faire, il conviendra de choisir des fils et flux selon l'invention et ensuite de les associer de manière à limiter drastiquement la présence d'éléments résiduels néfastes dans le métal déposé, c'est-à-dire le joint de soudure, en particulier les éléments Sb, Pb, P, S mais aussi, dans une moindre mesure, Sn, As et Bi.

En d'autres termes, le contrôle de la présence de ces éléments néfastes doit donc se faire dès le départ, c'est-à-dire lors du choix flux et du fil servant à obtenir le joint de soudure puisque ces éléments néfastes sont apportés par le flux et le fil.

## Revendications

1.  Flux aggloméré de soudage comprenant, exprimé en % en poids de flux :

- de 0.1 à 0.6% de carbone (C),
- de 0.3 à 3% de manganèse (Mn),
- moins de 0.006% de soufre (S),
- moins de 0.015% de plomb (Pb),
- moins de à 0.025% de phosphore (P),
- de 0.1 à 0.8% de titane (Ti),
- moins de 0.02% d'antimoine (Sb),
- et avec : (% S) + (% Sb) + (% P) + (% Pb) < 0.040%

où : (% S), (% Sb), (% P) et (% Pb) sont les quantités pondérales (exprimées en % en poids de flux) des éléments S, Sb, P et Pb, respectivement, dans le flux.

2. Flux selon la revendication 1, **caractérisé en ce qu'**il comprend :

    - de 0.2 à 0.5% de carbone (C),
    - de 0.5 à 2% de manganèse (Mn),
    - moins de 0.004% de soufre (S),
    - de 0.0005 à 0.01% de plomb (Pb),
    - de 0.005 à 0.015% de phosphore (P),
    - de 0.3 à 0.6% de titane (Ti) et/ou
    - de 0.001 à 0.01% d'antimoine (Sb).

3. Flux selon l'une des revendications 1 ou 2, **caractérisé en ce qu'**il comprend en outre de 2 à 10% de silicium (Si), de 10 à 30% de magnésium ou de 5 à 15 % d'aluminium.

4. Flux selon l'une des revendications 1 à 3, **caractérisé en ce qu'**il comprend en outre de 20 à 40% de fluorures d'alcalino-terreux et/ou de 1 à 2% d'alcalins sous forme de silicate aqueux.

5. Flux selon l'une des revendications 1 à 4, **caractérisé en ce que** la somme des quantités pondérales des éléments S, Sb, P et Pb est telle que :

$$(\% \text{ S}) + (\% \text{ Sb}) + (\% \text{ P}) + (\% \text{ Pb}) < 0.025\%$$

6. Fil de soudage comprenant, exprimé par rapport au poids total du fil :

    - de 0.05 à 0.15% de carbone (C),
    - de 0.4 à 1.3% de manganèse (Mn),
    - de 0.07 à 0.20% de silicium (Si),
    - de 2 à 2.8% de chrome (Cr),
    - de 0.5 à 1.2% de molybdène (Mo),
    - de 0.01 à 0.2 de nickel (Ni),
    - de 0.001 à 0.01% de soufre (S),
    - de 0.001 à 0.012% de phosphore (P),
    - de 1 à 20 ppm d'antimoine (Sb),
    - de 0.01 à 3 ppm de plomb (Pb),
    - de 0.01 à 3 ppm de bismuth (Bi),
    - de 0.10 à 0.35% de vanadium (V),
    - et du fer (Fe) pour le reste.

7. Fil de soudage selon la revendication 6, **caractérisé en ce qu'**il comprend en outre de 0.004 à 0.035% de niobium (Nb), de 1 à 100 ppm d'étain (Sn), et/ou de 1 à 100 ppm d'arsenic (As).

8. Procédé de soudage à l'arc submergé d'au moins une pièce en acier CrMoV, dans lequel on met en oeuvre un fil fusible et un flux de manière à obtenir un joint de soudure sur ladite au moins une pièce en acier CrMoV, **caractérisé en ce que** le fil est un fil de soudage selon l'une des revendications 6 ou 7 et/ou le flux est un flux de soudage selon l'une des revendications 1 à 5.

**9.** Procédé de soudage selon la revendication 8, **caractérisé en ce que** la pièce est en un acier CrMoV comprenant de 2 à 2.5% de Cr, de 0.9 à 1.1% de Mo, de 0.25 à 0.35% de V et du fer.

**10.** Joint de soudure susceptible d'avoir été obtenu par le procédé de soudage selon l'une des revendications 8 ou 9, **caractérisé en ce qu'**il comprend, exprimé en poids de joint :

- de 0.07 à 0.13% de carbone (C),
- de 0.55 à 1% de manganèse (Mn),
- de 0.09 à 0.18% de silicium (Si),
- de 2.2 à 2.6% de chrome (Cr),
- de 0.7 à 1.1 % de molybdène (Mo),
- de 10 à 100 ppm de soufre (S),
- de 30 à 100 ppm de phosphore (P),
- de 1 à 20 ppm d'antimoine (Sb),
- de 0.01 à 3 ppm de plomb (Pb),
- de 0.01 à 3 ppm de bismuth (Bi),
- de 0.15 à 0.3% de vanadium (V),
- de 1 à 100 ppm d'étain (Sn),
- de 1 à 100 ppm d'arsenic (As)
- et reste fer (Fe),

et **en ce que** les quantités pondérales, exprimées en ppm par rapport au poids de joint, en éléments P, S, As, Sn, Sb, Pb et Bi, respectivement, sont telles que : RCIndex < 25 où: RCIndex = 0.05x(P) + 0.01x(S) + 0.01x(As) + 0.18x(Sn) + 0.01x(Sb) + 5x(Pb) + 2x(Bi).

**11.** Joint de soudure selon la revendication 10, **caractérisé en ce que** les quantités pondérales, exprimées en ppm par rapport au poids de joint, en éléments P, S, As, Sn, Sb, Pb et Bi, respectivement, sont telles que : RCIndex < 20.

**12.** Joint de soudure selon l'une des revendications 10 ou 11, **caractérisé en ce qu'**il contient en outre l'un ou plusieurs des éléments suivants :

- de 0.002 à 0.01% de titane (Ti),
- de 0.015 à 0.04% d'oxygène (O),
- de 0.003 à 0.015% d'azote (N),
- de 0.005 à 0.03% de niobium (Nb) et
- de 0.01 à 0.2 de nickel (Ni).

**13.** Pièce en acier CrMoV comprenant de 2 à 2.5% de Cr, de 0.9 à 1.1% de Mo, de 0.25 à 0.35% de V et du fer, **caractérisée en ce qu'**elle comprend au moins un joint de soudure selon l'une des revendications 9 à 12.

**14.** Pièce selon la revendication 13, **caractérisé en ce qu'**elle est un tube, une plaque ou une pièce forgée.

**15.** Utilisation d'une pièce selon l'une des revendications 13 ou 14 pour la fabrication de tout ou partie d'un réacteur ou d'une cuve.

**Patentansprüche**

**1.** Agglomeriertes Schweißflussmittel, umfassend, ausgedrückt in Gewichts-% Flussmittel:

- von 0,1 bis 0,6 % Kohlenstoff (C),
- von 0,3 bis 3 % Mangan (Mn),
- weniger als 0,006 % Schwefel (S),
- weniger als 0,015 % Blei (Pb),
- weniger als 0,025 % Phosphor (P),
- von 0,1 bis 0,8 % Titan (Ti),
- weniger als 0,02 % Antimon (Sb),
- und mit: (% S) + (% Sb) + (% P) + (% Pb) < 0,040 %

wobei: (% S), (% Sb), (% P) und (% Pb) die Gewichtsmengen (ausgedrückt in Gewichts-% Flussmittel) der jeweiligen Elemente S, Sb, P und Pb im Flussmittel sind.

2. Flussmittel nach Anspruch 1, **dadurch gekennzeichnet, dass** es Folgendes umfasst:

- von 0,2 bis 0,5 % Kohlenstoff (C),
- von 0,5 bis 2 % Mangan (Mn),
- weniger als 0,004 % Schwefel (S),
- von 0,0005 bis 0,01 % Blei (Pb),
- von 0,005 bis 0,015 % Phosphor (P),
- von 0,3 bis 0,6 % Titan (Ti) und/oder
- von 0,001 bis 0,01 % Antimon (Sb).

3. Flussmittel nach einem der Ansprüche 1 oder 2, **dadurch gekennzeichnet, dass** es des Weiteren von 2 bis 10 % Silicium (Si), von 10 bis 30 % Magnesium oder von 5 bis 15 % Aluminium umfasst.

4. Flussmittel nach einem der Ansprüche 1 bis 3, **dadurch gekennzeichnet, dass** es des Weiteren von 20 bis 40 % Erdalkalifluoride und/oder von 1 bis 2 % Alkalis in Form von Wasserglas umfasst.

5. Flussmittel nach einem der Ansprüche 1 bis 4, **dadurch gekennzeichnet, dass** die Summe der Gewichtsmengen der Elemente S, Sb, P und Pb derart ist, dass:

$$(\% \, S) + (\% \, Sb) + (\% \, P) + (\% \, Pb) < 0,025 \, \%.$$

6. Schweißdraht, umfassend, ausgedrückt bezogen auf das Gesamtgewicht des Drahts:

- von 0,05 bis 0,15 % Kohlenstoff (C),
- von 0,4 bis 1,3 % Mangan (Mn),
- von 0,07 bis 0,20 % Silicium (Si),
- von 2 bis 2,8 % Chrom (Cr),
- von 0,5 bis 1,2 % Molybdän (Mo),
- von 0,01 bis 0,2 % Nickel (Ni),
- von 0,001 bis 0,01 % Schwefel (S),
- von 0,001 bis 0,012 % Phosphor (P),
- von 1 bis 20 ppm Antimon (Sb),
- von 0,01 bis 3 ppm Blei (Pb),
- von 0,01 bis 3 ppm Bismut (Bi),
- von 0,10 bis 0,35 % Vanadium (V),
- und Eisen (Fe) als Rest.

7. Schweißdraht nach Anspruch 6, **dadurch gekennzeichnet, dass** er des Weiteren von 0,004 bis 0,035% Niob (Nb), von 1 bis 100 ppm Zinn (Sn) und/oder von 1 bis 100 ppm Arsen (As) umfasst.

8. Verfahren zum Unterpulver-Schweißen von mindestens einem Stück CrMoV-Stahl, wobei ein Schmelzdraht und ein Flussmittel auf eine Weise verwendet werden, um eine Schweißnaht auf dem mindestens einen Stück CrMoV-Stahl zu erhalten, **dadurch gekennzeichnet, dass** der Draht ein Schweißdraht nach einem der Ansprüche 6 oder 7 ist und/oder das Flussmittel ein Schweißflussmittel nach einem der Ansprüche 1 bis 5 ist.

9. Verfahren zum Schweißen nach Anspruch 8, **dadurch gekennzeichnet, dass** das Stück aus einem CrMoV-Stahl ist, umfassend von 2 bis 2,5% Cr, von 0,9 bis 1,1% Mo, von 0,25 bis 0,35 % V und Eisen.

10. Schweißnaht, die durch das Schweißverfahren nach einem der Ansprüche 8 oder 9 erhalten werden kann, **dadurch gekennzeichnet, dass** sie Folgendes umfasst, ausgedrückt in Gewicht der Naht:

- von 0,07 bis 0,13 % Kohlenstoff (C),
- von 0,55 bis 1 % Mangan (Mn),

- von 0,09 bis 0,18 % Silicium (Si),
- von 2,2 bis 2,6 % Chrom (Cr),
- von 0,7 bis 1,1 % Molybdän (Mo),
- von 10 bis 100 ppm Schwefel (S),
- von 30 bis 100 ppm Phosphor (P),
- von 1 bis 20 ppm Antimon (Sb),
- von 0,01 bis 3 ppm Blei (Pb),
- von 0,01 bis 3 ppm Bismut (Bi),
- von 0,15 bis 0,3 % Vanadium (V),
- von 1 bis 100 ppm Zinn (Sn),
- von 1 bis 100 ppm Arsen (As)
- und Rest Eisen (Fe),

und dadurch, dass die Gewichtsmengen, ausgedrückt in ppm bezogen auf das Nahtgewicht, von Elementen P, S, As, Sn, Sb, Pb und Bi jeweils derart sind, dass: RC-Index < 25 wobei: RC-Index = 0,05 x (P) + 0,01 x (S) + 0,01 x (As) + 0,18 x (Sn) + 0,01 x (Sb) + 5 x (Pb) + 2 x (Bi).

11. Schweißnaht nach Anspruch 10, **dadurch gekennzeichnet, dass** die Gewichtsmengen, ausgedrückt in ppm bezogen auf das Nahtgewicht, von Elementen P, S, As, Sn, Sb, Pb und Bi jeweils derart sind, dass: RC-Index < 20.

12. Schweißnaht nach einem der Ansprüche 10 oder 11, **dadurch gekennzeichnet, dass** sie des Weiteren eins oder mehrere der folgenden Elemente enthält:

- von 0,002 bis 0,01 % Titan (Ti),
- von 0,015 bis 0,04 % Sauerstoff (O),
- von 0,003 bis 0,015 % Stickstoff (N),
- von 0,005 bis 0,03 % Niob (Nb) und
- von 0,01 bis 0,2 Nickel (Ni).

13. Stück CrMoV-Stahl, umfassend von 2 bis 2,5 % Cr, von 0,9 bis 1,1 % Mo, von 0,25 bis 0,35 % V und Eisen, **dadurch gekennzeichnet, dass** es mindestens eine Schweißnaht nach einem der Ansprüche 9 bis 12 umfasst.

14. Stück nach Anspruch 13, **dadurch gekennzeichnet, dass** es ein Rohr, eine Platte oder ein geschmiedetes Stück ist.

15. Verwendung eines Stücks gemäß einem der Ansprüche 13 oder 14 zum kompletten oder teilweisen Herstellen eines Reaktors oder eines Tanks.

## Claims

1. Agglomerated welding flux comprising, expressed as a % by weight of flux:

- 0.1 to 0.6% carbon (C),
- 0.3 to 3% manganese (Mn),
- less than 0.006% sulphur (S),
- less than 0.015% lead (Pb),
- less than 0.025% phosphorus (P),
- 0.1 to 0.8% titanium (Ti),
- less than 0.02% antimony (Sb),
- and where: (% S) + (% Sb) + (% P) + (% Pb) < 0.040%

where: (% S), (% Sb), (% P) and (% Pb) are quantities by weight (expressed as a % by weight of flux) of the elements S, Sb, P and Pb, respectively, in the flux.

2. Flux according to claim 1, **characterised in that** it comprises:

- 0.2 to 0.5% carbon (C),
- 0.5 to 2% manganese (Mn),

- less than 0.004% sulphur (S),
- 0.0005 to 0.01% lead (Pb),
- 0.005 to 0.015% phosphorus (P),
- 0.3 to 0.6% titanium (Ti) and/or
- 0.001 to 0.01% antimony (Sb).

3. Flux according to one of claims 1 or 2, **characterised in that** it further comprises 2 to 10% silicon (Si), 10 to 30% magnesium or 5 to 15% aluminium.

4. Flux according to one of claims 1 to 3, **characterised in that** it further comprises 20 to 40% alkaline earth fluorides and/or 1 to 2% alkalis in aqueous silicate form.

5. Flux according to one of claims 1 to 4, **characterised in that** the sum of the quantities by weight of the elements S, Sb, P and Pb is such that:

$$(\% \, S) + (\% \, Sb) + (\% \, P) + (\% \, Pb) < 0.025\%.$$

6. Welding wire comprising, expressed with respect to the total weight of the wire:

- 0.05 to 0.15% carbon (C),
- 0.4 to 1.3% manganese (Mn),
- 0.07 to 0.20% silicon (Si),
- 2 to 2.8% chromium (Cr),
- 0.5 to 1.2% molybdenum (Mo),
- 0.01 to 0.2% nickel (Ni),
- 0.001 to 0.01% sulphur (S),
- 0.001 to 0.012% phosphorus (P),
- 1 to 20 ppm antimony (Sb),
- 0.01 to 3 ppm lead (Pb),
- 0.01 to 3 ppm bismuth (Bi),
- 0.10 to 0.35% vanadium (V),
- and iron (Fe) for the remainder.

7. Welding wire according to claim 6, **characterised in that** it further comprises 0.004 to 0.035% niobium (Nb), 1 to 100 ppm tin (Sn), and/or 1 to 100 ppm arsenic (As).

8. Method for submerged arc welding of at least one part made of CrMoV steel, wherein a fusible wire and a flux are used so as to obtain a weld seam on said at least one part made of CrMoV steel, **characterised in that** the wire is a welding wire according to one of claims 6 or 7 and/or the flux is a welding flux according to one of claims 1 to 5.

9. Welding method according to claim 8, **characterised in that** the part is made of a CrMoV steel comprising 2 to 2.5% Cr, 0.9 to 1.1% Mo, 0.25 to 0.35% V and iron.

10. Weld seam suitable for being obtained using the welding method according to one of claims 8 or 9, **characterised in that** it comprises, expressed in seam weight:

- 0.07 to 0.13% carbon (C),
- 0.55 to 1% manganese (Mn),
- 0.09 to 0.18% silicon (Si),
- 2.2 to 2.6% chromium (Cr),
- 0.7 to 1.1% molybdenum (Mo),
- 10 to 100 ppm sulphur (S),
- 30 to 100 ppm phosphorus (P),
- 1 to 20 ppm antimony (Sb),
- 0.01 to 3 ppm lead (Pb),
- 0.01 to 3 ppm bismuth (Bi),

- 0.15 to 0.3% vanadium (V),
- 1 to 100 ppm tin (Sn),
- 1 to 100 ppm arsenic (As)
- and remainder iron (Fe),

and **in that** the quantities by weight, expressed in ppm with respect to the seam weight, of the elements P, S, As, Sn, Sb, Pb and Bi, respectively, are such that: RCIndex < 25 where: RCIndex = 0.05x(P) + 0.01x(S) + 0.01x(As) + 0.18x(Sn) + 0.01x(Sb) + 5x(Pb) + 2x(Bi).

11. Weld seam according to claim 10, **characterised in that** the quantities by weight, expressed in ppm with respect to the seam weight, of the elements P, S, As, Sn, Sb, Pb and Bi, respectively, are such that: RCIndex < 20.

12. Weld seam according to one of claims 10 or 11, **characterised in that** it further contains one or a plurality of the following elements:

- 0.002 to 0.01% titanium (Ti),
- 0.015 to 0.04% oxygen (C),
- 0.003 to 0.015% nitrogen (N),
- 0.005 to 0.03% niobium (Nb) and
- 0.01 to 0.2 nickel (Ni).

13. Part made of CrMoV steel comprising 2 to 2.5% Cr, 0.9 to 1.1% Mo, 0.25 to 0.35 V and iron, **characterised in that** it comprises at least one weld seam according to one of claims 9 to 12.

14. Part according to claim 13, **characterised in that** it is a tube, a plate or a forged part.

15. Use of a part according to one of claims 13 or 14 for manufacturing all or part of a reactor or tank.

**EP 2 376 256 B1**

## RÉFÉRENCES CITÉES DANS LA DESCRIPTION

**Documents brevets cités dans la description**

- FR 2740715 A

- FR 2074278 A